# EUROPEAN PATENT SPECIFICATION

(11) **EP 1 351 840 B1**
(45) Date of publication and mention of the grant of the patent: **23.02.2011**
(21) Application number: 02732135.5
(22) Date of filing: 14.01.2002
(51) Int. Cl.: B60P 1/02, B60P 3/04, F15B 15/28

(54) **PLATFORMS FOR USE IN TRANSPORTERS**
PLATTFORMEN ZUR VERWENDUNG IN TRANSPORTERN
PLATES-FORMES POUR VEHICULES DE TRANSPORT

(30) Priority: 17.01.2001 GB 0101180
(43) Date of publication of application: 15.10.2003
(73) Proprietor: Parkhouse Country Estates Limited, Cumbria LA7 7RF (GB)
(72) Inventor: HOUGHTON, Michael, John, Cumbria LA7 7RF (GB)
(74) Representative: Clark, David James
(86) International application number: PCT/GB2002/000141
(87) International publication number: WO 2002/057112

(56) References cited:
- EP-A- 0 305 306
- EP-A- 0 624 491
- EP-A- 0 763 459
- WO-A-90/00990
- FR-A- 2 530 558
- FR-A- 2 552 380
- FR-A- 2 794 196
- GB-A- 913 426
- US-A- 4 121 504

## Description

### Field to the Invention

The present invention relates to platform systems for use in transporters, especially, but not limited to, platform systems for use in livestock transporters. Such a platform system, comprising the features defined in the preamble of claim 1, is known for example from FR 2 552 380 A1.

### Background to the Invention

Trailers for use in transporting livestock generally comprise a number of levels each level having a platform to support the livestock. Such trailers enable livestock to be transported economically and efficiently. Trailers for supporting livestock may comprise an integrated cab plus transport area or comprise a trailer forming a livestock area to be towed behind a lorry.

The trailer may have at least one platform which is vertically moveable within the trailer in order for the height of the level to be adjusted according to the type of goods being transported. In livestock transporters, the height of the level will be dependent upon the type of livestock being transported. For example, a level supporting cattle will require a greater height than a level supporting poultry or sheep or pigs. Accordingly, it is advantageous for a trailer to have a platform which can move vertically within the trailer in order for the trailer to transport different goods efficiently and economically.

However, when a platform supporting goods is moved, the platform may not remain in a horizontal plane, especially, if the goods are not distributed evenly across the platform. This results from the drive means moving the platform higher vertically in regions supporting less weight. Prior art methods which try to address this problem have used a cog mechanism and hydraulic geared floor dividers in order for the platform to remain in a horizontal plane or similar apparatus. However, such mechanisms are mechanically complicated and are difficult to clean. This is especially apparent in trailers for use in transporting livestock which need to be cleaned to a high standard frequently. Accordingly, such platforms can be restricting in transporting livestock. Platforms which suffer this problem are described in FR 2,552,380, EP 0763459,GB 913426, WO 90/00990, FR 2530558 and EP 0624491.

It is an aim of the present invention to overcome at least on problem associated with the prior art whether referred to herein or otherwise.

### Summary of the Invention

According to the present invention there is provided an apparatus and method as set forth in the appended claims 1 and 13. Other features of the invention will be apparent from the dependent claims, and the description which follows.

### Brief Description of the Drawings

The present invention will now be described, by way of example only, and with reference to the following drawings, in which:
Figure 1 is a side cross-section of a trailer for use in transporting livestock.
Figure 2 is a cross-section through a part of a platform for use in a trailer for use in transporting livestock.
Figure 3 is a cross-section through a part of another embodiment of a platform for use in a trailer for use in transporting livestock.
Figure 4 is a cross-section through a part of a platform for use in a trailer for use in transporting livestock.
Figure 5 is a cross-section through a cable extension position transducer.
Figure 6 is a cross-section through a part of a further embodiment of a platform for use in transporting livestock.
Figure 7 in a cross-section through X-X in Figure 6.

### Description of the Preferred Embodiment

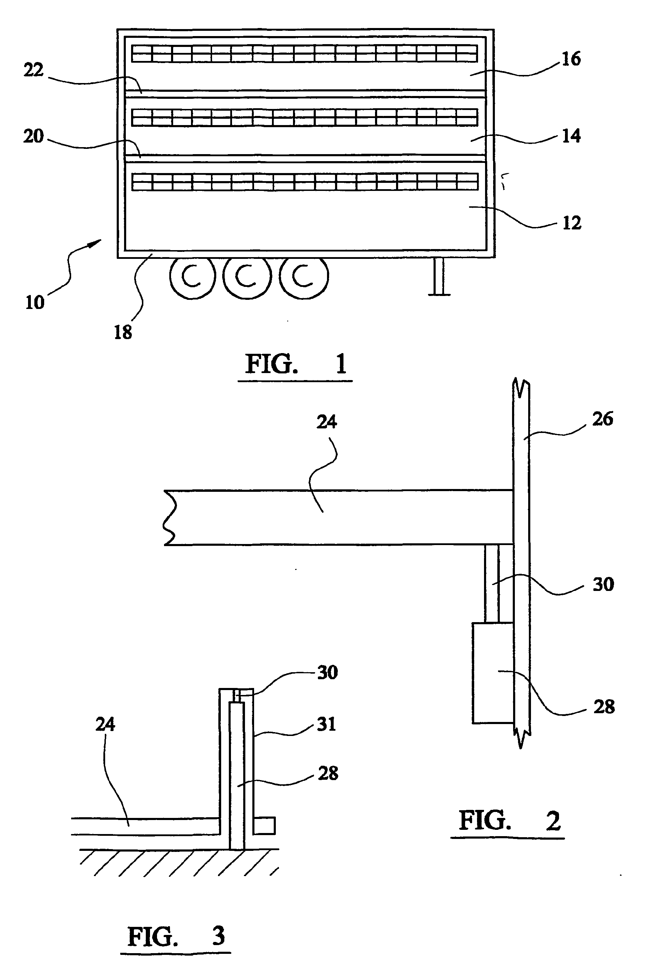

A shown in Figure 1, a trailer 10 for use in transporting livestock comprises a plurality of levels. The trailer 10 has a first level 12, a second level 14, and a third level 16 for supporting three levels of livestock. Each level has a platform 18, 20, 22 for supporting the livestock thereon. The height of each level 12, 14, 16 is dependent upon the type of livestock being supported. Accordingly, it is advantageous for each platform 18, 20, 22 to be supported in the trailer 10 such that the vertical position of each platform can be adjusted in the trailer in order for the trailer to be adapted to transport different types of livestock. The platform 18 of the first level may be fixed since it is the floor of the trailer 10 and, therefore, cannot be moved vertically downwards.

As shown in Figure 2, it is important for each platform to be substantially horizontally supported in the trailer. With platforms 24 that are vertically adjusted using a hydraulic piston or ram 26 it is easy to locate a linear transducer (not shown) within the cylinder 28 in order to monitor and record the vertical extension of the extension member 28. However, platforms 24 for use in trailers generally need to be moved vertically over a relatively large distance. Accordingly, the extension member 30 needs to be extended over a substantial distance. This requires a relatively long extension member 30 and a corresponding cylinder 28. This, therefore, greatly restricts the amount that the platform can be lowered since the platform 24 must always be located above the cylinder 28 of the hydraulic piston, as shown in Figure 2.

Alternatively, a sleeve member 31 can be used to secure the platform 24 to the extension member 30 such that when the extension member 30 is retracted the platform 24 is at ground level within the trailer, as shown in Figure 3. One end of the sleeve member 31 is connected to the top of the extension member 30 and the other end connects to the platform 24. The extension member 30 is connected to the platform 24 through the sleeve member 31 such that the platform is located vertically below the end of the extension member 30. However, if a large single stage cylinder was used then the sleeve 31 would project upwardly from the platform 24 and possibly interfere with the other platforms or the roof of the trailer, for example, if the upper deck was required to be positioned relatively close to the roof of the trailer (for example, for small livestock) then the sleeve 31 and extension member 30 would need to protrude through the roof of the trailer, which is not acceptable in trailers.

A number of hydraulic pistons are required in order to raise and lower the platform 24 vertically relative to the trailer 26. These pistons are preferably located around the periphery of the platform 24. Alternatively, pneumatic or other suitably powered pistons may be used. If the platform 24 has goods supported thereon and the platform 24 is raised or lowered then the distance that the extension members 30 of the pistons are extended may be different. This may result in part from the weight of the goods supported on the platform not being evenly distributed over the area of the platform 24. Accordingly, in areas where a relatively low weight of goods are supported the platform may be moved upwardly more easily. Accordingly, it is necessary to measure the amount of extension of the extension members 30 in order to determine whether the platform 24 is substantially horizontal. In prior art methods, linear transducers have been used which secure within the cylinder of the pistons. Such transducers are adequate for single stage pistons. However, if multistage pistons are used to enable the platform to be raised and lowered over a greater distance then a simple linear transducer cannot be used.

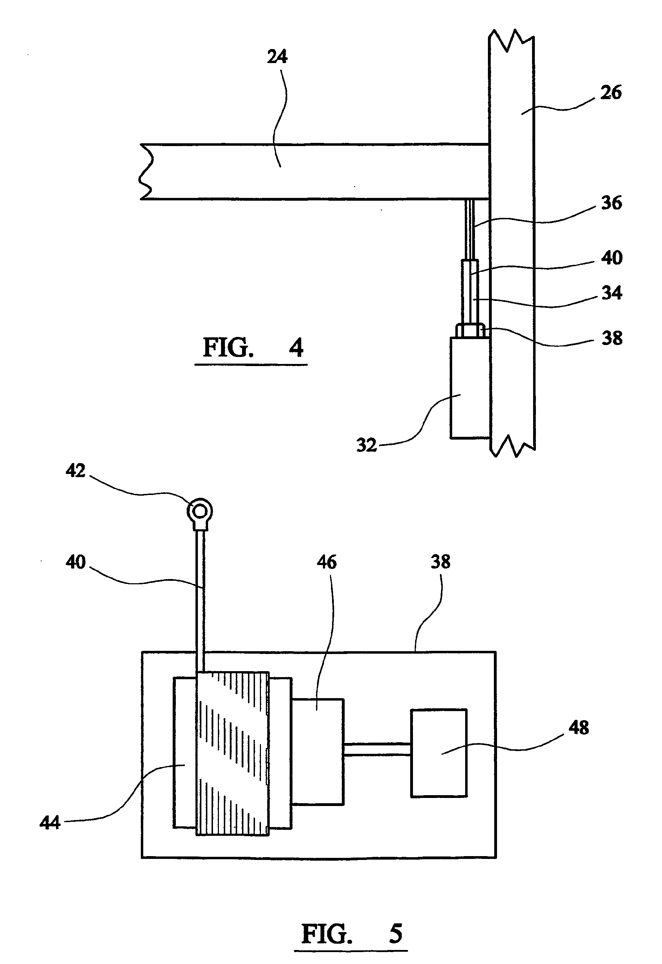

In a preferred embodiment of the present invention a cable extension transducer 38 is used, as shown in Figure 4. A multistage piston has an extension member which comprises a plurality of stages 34, 36 and a single cylinder 32. The advantage of multistage pistons is that the height of the housing only needs to be slightly greater than the length of the longest stage of the extension member. Accordingly, multistage pistons are useful in situations where space is important. However, linear transducers cannot be used to measure the overall length of extension of the extension member.

The cable extension transducer 38 is located adjacent to the cylinder 32 of the multistage piston. The cable extension transducer 38 has a flexible cable 40 which extends from a housing. The flexible cable 40 has a fixing plate 42 at the end thereof. The fixing plate 42 is secured to the end of the first stage 36 of the extension member. Accordingly, the cable extension transducer can measure the overall length of the extension member comprising a plurality of stages.

The cable extension transducer 38 comprises a housing from which the flexible cable 40 can be pulled out from, as shown in Figure 5. The flexible cable 40 is contained on a spool 44 in the housing. The flexible cable 40 may be a metal cable. The spool has spring means 46 associated therewith. The spring means urges the flexible cable to be wrapped around the spool 44. Accordingly, if the length of the extension member shortens then the flexible cable is wound around the spool so that a new measurement may be taken. The cable extension transducer comprises a printed circuit board 48 for measuring and recording the length of the extension member and, accordingly, the position of the platform.

The trailer has a number of multistage pistons located around the periphery of the platform. A single control and measurement means may be used in order to co-ordinate the lifting and lowering of the platform in order to ensure that the platform is substantially horizontal after moving the platform.

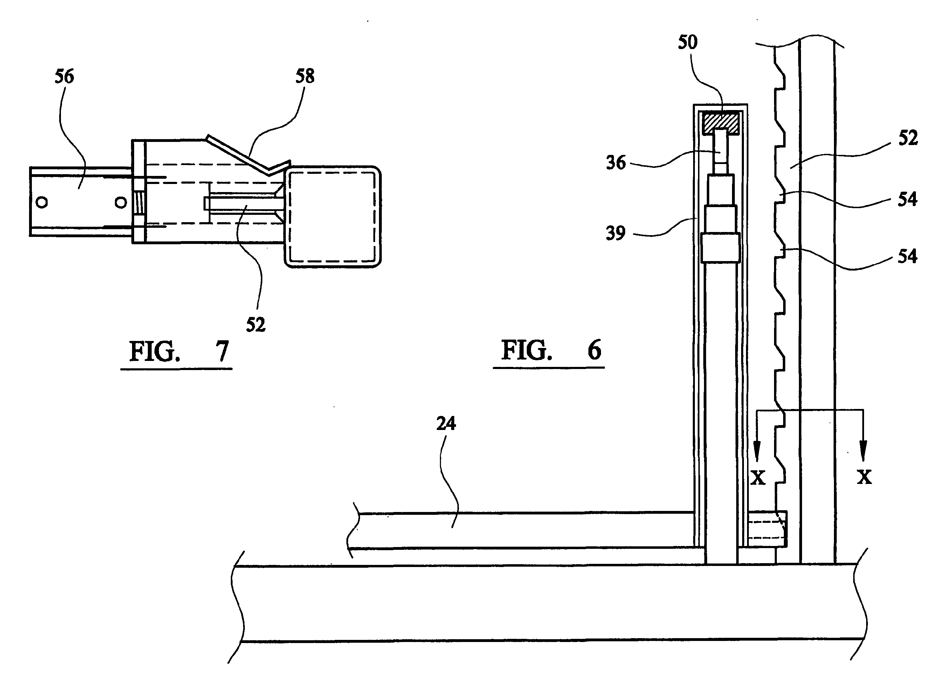

As shown in Figure 6, the multistage piston is located within a sleeve member 39. The end of the upper stage 36 provides a ram socket 50 in order to co-operate with the upper end of the sleeve member 39 in order to move the platform 24. The trailer has a locking track 52 provided on its inner surface. The locking track 52 is provided with a plurality of supporting portions 54 which are arranged to engage with a locking element provided on the platform 24. The locking element is arranged to engage with the supporting portion 54 in order to support and lock the platform 24 in position relative to the trailer. The locking track 52 may be adjustable in order for the space between adjacent supporting portions 54 to be altered depending upon the individuals requirements.

As shown in Figure 7, the locking element comprises a locking piston 56 which is connected to a locking plate 58. The locking piston 56 may be pneumatically, hydraulically or mechanically powered. As the platform 24 is moved upwards, the locking piston 56 and locking plate 58 automatically follow the profile of the locking track 52.

When the locking piston 56 is fully extended and the locking plate 58 is engaged in the supporting portion 54 of the locking track 52 a signal, preferably electrical, is transmitted from a sensor to a controller. The platform 24 has a plurality of locking elements located around its periphery and each locking element transmits a signal when the relevant locking piston is fully extended and engaged within a supporting portion. The controller monitors the signal and provides display means to display when all the locking pistons are fully extended and the respective locking plates are engaged in a supporting portion of the relevant locking track.

This provides a safety feature whereby the user is informed when the platform is safely engaged or is not fully engaged. The platform may be lowered by retracting the locking pistons using suitable means.

The locking pistons and locking plates may be arranged to automatically disengage when the multistage piston is powered.

One main advantage of the present invention is that it allows the exact position of each individual multi-stage cylinder extension height to be measured and controlled. Once this position is known accurately it allows all cylinders to be independently controlled using computer control in order to maintain a perfectly level position. Alternatively, the cylinders can be independently controlled to angle the platform as desired, for example to ease the unloading of heavy loads or alternatively for animal transporters to ease the washing out process. This cannot be achieved so easily with prior art cog mechanisms or geared dividers.

In addition, each platform in the trailer may comprise the above system for measuring whether the platform is substantially horizontal.

## Claims

1. A platform system for use in a trailer (10), the platform system comprising a platform (24) and a plurality of pistons (26), the platform (24) being arranged, in use, to support goods thereon and being movable vertically relative to the trailer (10) by the plurality of pistons (26), and **characterised in that** the platform system comprises a cable extension position transducer system (38) adapted to measure extension of the pistons (26); and controlling means adapted to independently controll the extension of each piston (26) in order to maintain the platform (24) in a level position.

2. A platform system according to claim 1 in which the pistons (26) comprise cylinders which can be independently controlled by the controlling means to angle the platform (24), for example to ease the unloading of heavy loads or to ease the washing out process when the platform (24) is used in an animal transporter.

3. A platform system according to claim 1 or claim 2 in which the or each piston (26) is a hydraulic piston.

4. A platform system according to any preceding claim in which the or each piston (26) is a multi-stage piston.

5. A platform system according to any preceding claim in which the trailer (10) is arranged, in use, to transport livestock.

6. A platform system according to any preceding claim in which the platform (24) comprises locking means (52, 54, 56, 58) to lock the platform (24) in position relative to the trailer (10).

7. A platform system according to claim 6 in which the locking means (52, 54, 56, 58) comprises a locking track (52) which provides support portions (54) to engage with a locking element (58) located on the platform (24).

8. A platform system according to claim 7 in which the locking element (58) comprises a locking plate (58).

9. A platform system according to claim 8 in which the locking plate (58) is movable by a locking piston (56).

10. A platform system according to claim 8 or claim 9 in which the locking plate (58) is locked in position when the locking plate (58) is engaged in a respective support portion (54).

11. A platform system according to any one of claims 6 to 10 in which the or each locking means (52, 54, 56, 58) comprises signal means to indicate when the locking means (52, 54, 56, 58) is locked in position.

12. A platform system according to any one claims 6 to 11 comprising control means which indicates when all of the locking means (52, 54, 56, 58) are locked and the platform (24) is locked in position.

13. A method of providing a trailer (10) for use in transporting comprising, the trailer (10) comprising a platform support system, the method comprising: supporting a platform (24) within the trailer (10), wherein the platform (24) is movable vertically relative to the trailer (10) by a plurality of pistons (26) and **characterised by** measuring the extension of the pistons (26) using a cable extension position transducer system (38) to independently control each piston (26) in order to maintain the platform (24) in a level position, or to angle the platform (24).

14. A method according to claim 13 in which the method comprises providing two platforms (18, 20, 22, 24).

15. A method according to claim 13 in which the method comprises providing three platforms (18, 20, 22, 24).

16. A method according to claim 14 or claim 15 in which the method comprises providing separate pistons (26) for moving each platform (18, 20, 22, 24).

17. A method according to any one of claims 13 to 16 in which the method comprises moving the or each platform (18, 20, 22, 24) whilst the or each platform (18, 20, 22, 24) is supporting goods.

18. A method according to any one of claims 13 to 18 in which the method comprises locking the platform (18, 20, 22, 24) in position relative to the trailer (10).

19. A method according to claim 19 in which the method comprises indicating when the platform (18, 20, 22, 24) is locked or unlocked relative to the trailer (10).

## Patentansprüche

1. Plattformsystem zur Verwendung in einem Anhänger (10), wobei das Plattformsystem eine Plattform (24) und mehrere Kolben (26) umfasst, wobei die Plattform (24) im Gebrauch so angeordnet ist, dass sie die Waren, die sich auf ihr befinden, stützt und bezüglich des Anhängers (10) mittels der mehreren Kolben (26) vertikal beweglich ist, **dadurch gekennzeichnet, dass** das Plattformsystem ein Kabelverlängerungspositionsgebersystem (38), das geeignet ist, die Verlängerung der Kolben (26) zu messen, und ein Steuermittel umfasst, das geeignet ist, die Verlängerung jedes Kolbens (26) unabhängig zu steuern, um die Plattform (24) in einer ebenen Position zu halten.

2. Plattformsystem nach Anspruch 1, wobei die Kolben (26) Zylinder umfassen, die von dem Steuermittel unabhängig gesteuert werden können, um die Plattform (24) abzuwinkeln, um beispielsweise das Abladen schwerer Ladungen oder den Auswaschvorgang zu erleichtern, wenn die Plattform (24) in einem Tiertransporter verwendet wird.

3. Plattformsystem nach Anspruch 1 oder 2, wobei der oder jeder Kolben (26) ein hydraulischer Kolben ist.

4. Plattformsystem nach einem der vorhergehenden Ansprüche, wobei der oder jeder Kolben (26) ein mehrstufiger Kolben ist.

5. Plattformsystem nach einem der vorhergehenden Ansprüche, wobei der Anhänger (10) im Gebrauch zum Viehtransport angeordnet ist.

6. Plattformsystem nach einem der vorhergehenden Ansprüche, wobei die Plattform (24) ein Verriegelungsmittel (52, 54, 56, 58) umfasst, um die Plattform (24) positionsmäßig bezüglich des Anhängers (10) zu verriegeln.

7. Plattformsystem nach Anspruch 6, wobei das Verriegelungsmittel (52, 54, 56, 58) eine Verriegelungsschiene (52) umfasst, die Stützabschnitte (54) zum Eingriff mit einem an der Plattform (24) angeordneten Verriegelungselement (58) bereitstellt.

8. Plattformsystem nach Anspruch 7, wobei das Verriegelungselement (58) eine Verriegelungsplatte (58) umfasst.

9. Plattformsystem nach Anspruch 8, wobei die Verriegelungsplatte (58) mittels eines Verriegelungskolbens (56) beweglich ist.

10. Plattformsystem nach Anspruch 8 oder 9, wobei die Verriegelungsplatte (58) positionsmäßig verriegelt ist, wenn die Verriegelungsplatte (58) in einem jeweiligen Stützabschnitt (54) in Eingriff steht.

11. Plattformsystem nach einem der Ansprüche 6 bis 10, wobei das oder jedes Verriegelungsmittel (52, 54, 56, 58) Signalmittel umfasst, um anzuzeigen, wenn das Verriegelungsmittel (52, 54, 56, 58) positionsmäßig verriegelt ist.

12. Plattformsystem nach einem der Ansprüche 6 bis 11, mit einem Steuermittel, das angibt, wenn alle Verriegelungsmittel (52, 54, 56, 58) verriegelt sind und die Plattform (24) positionsmäßig verriegelt ist.

13. Verfahren zur Bereitstellung eines Anhängers (10) zum Gebrauch beim Transport, wobei der Anhänger (10) ein Plattformstützsystem umfasst, wobei das Verfahren das Stützen einer Plattform (24) im Anhänger (10) umfasst, wobei die Plattform (24) bezüglich des Anhängers (10) mittels mehrerer Kolben (26) vertikal beweglich ist, **gekennzeichnet durch** Messen der Verlängerung der Kolben (26) unter Verwendung eines Kabelverlängerungspositionsgebersystems (38) zur unabhängigen Steuerung jedes Kolbens (26), um die Plattform (24) in einer ebenen Position zu halten oder um die Plattform (24) abzuwinkeln.

14. Verfahren nach Anspruch 13, wobei das Verfahren das Bereitstellen von zwei Plattformen (18, 20, 22, 24) umfasst.

15. Verfahren nach Anspruch 13, wobei das Verfahren das Bereitstellen von drei Plattformen (18, 20, 22, 24) umfasst.

16. Verfahren nach Anspruch 14 oder 15, wobei das Verfahren das Bereitstellen von getrennten Kolben (26) zum Bewegen jeder Plattform (18, 20, 22, 24) umfasst.

17. Verfahren nach einem der Ansprüche 13 bis 16, wobei das Verfahren das Bewegen der oder jeder Plattform (18, 20, 22, 24), während die oder jede Plattform (18, 20, 22, 24) Waren stützt, umfasst.

18. Verfahren nach einem der Ansprüche 13 bis 17, wobei das Verfahren das Verriegeln der Plattform (18, 20, 22, 24) positionsmäßig bezüglich des Anhängers (10) umfasst.

19. Verfahren nach Anspruch 18, bei dem angezeigt wird, wenn die Plattform (18, 20, 22, 24) bezüglich des Anhängers (10) verriegelt oder entriegelt ist.

## Revendications

1. Système de plateforme à utiliser dans une remorque (10), le système de plateforme comprenant une plateforme (24) et une pluralité de pistons (26), la plateforme (24) étant agencée, en fonctionnement, pour supporter des biens et pouvant être déplacée verticalement par rapport à la remorque (10) grâce à la pluralité de pistons (26), et **caractérisé en ce que** le système de plateforme comprend un système transducteur de position d'extension de câble (38) conçu pour mesurer l'extension des pistons (26) ; et commandant des moyens conçus pour commander indépendamment l'extension de chaque piston (26) afin de maintenir la plateforme (24) dans une position à niveau.

2. Système de plateforme selon la revendication 1, dans lequel les pistons (26) comprennent des cylindres pouvant être commandés indépendamment par les moyens de commande pour incliner la plateforme (24), par exemple pour faciliter le déchargement de charges lourdes ou pour faciliter le processus de lavage lorsque la plateforme (24) est utilisée dans un véhicule de transport d'animaux.

3. Système de plateforme selon la revendication 1 ou la revendication 2, dans lequel le ou les pistons (26) est/sont des pistons hydrauliques.

4. Système de plateforme selon l'une quelconque des revendications précédentes, dans lequel le ou les pistons (26) est/sont des pistons à plusieurs étages.

5. Système de plateforme selon l'une quelconque des revendications précédentes, dans lequel la remorque (10) est agencée, en fonctionnement, pour transporter du bétail.

6. Système de plateforme selon l'une quelconque des revendications précédentes, dans lequel la plateforme (24) comprend des moyens de verrouillage (52, 54, 56, 58) pour verrouiller la plateforme (24) en position par rapport à la remorque (10).

7. Système de plateforme selon la revendication 6, dans lequel les moyens de verrouillage (52, 54, 56, 58) comprennent un rail de verrouillage (52) pourvu de parties de support (54) prévues pour s'imbriquer avec un élément de verrouillage (58) positionné sur la plateforme (24).

8. Système de plateforme selon la revendication 7, dans lequel l'élément de verrouillage (58) comprend une plaque de verrouillage (58).

9. Système de plateforme selon la revendication 8, dans lequel la plaque de verrouillage (58) peut être déplacée par un piston de verrouillage (56).

10. Système de plateforme selon la revendication 8 ou la revendication 9, dans lequel la plaque de verrouillage (58) est verrouillée en position lorsque la plaque de verrouillage (58) est imbriquée dans une partie de support (54) respective.

11. Système de plateforme selon l'une quelconque des revendications 6 à 10, dans lequel le ou les moyens de verrouillage (52, 54, 56, 58) comprend/comprennent des moyens de signalisation pour indiquer lorsque les moyens de verrouillage (52, 54, 56, 58) sont verrouillés en position.

12. Système de plateforme selon l'une quelconque des revendications 6 à 11, comprenant des moyens de commande qui indiquent lorsque tous les moyens de verrouillage (52, 54, 56, 58) sont verrouillés et lorsque la plateforme (24) est verrouillée en position.

13. Procédé de mise à disposition d'une remorque (10) à utiliser dans le transport, comprenant la remorque (10) comprenant un système de support de plateforme, le procédé comprenant : le support d'une plateforme (24) à l'intérieur de la remorque (10), dans lequel la plateforme (24) peut être déplacée verticalement par rapport à la remorque (10) grâce à une pluralité de pistons (26) et **caractérisé en ce que** l'on mesure l'extension des pistons (26) à l'aide d'un système transducteur de position d'extension de câble (38) permettant de commander indépendamment chaque piston (26) afin de maintenir la plateforme (24) dans une position à niveau ou d'incliner la plateforme (24).

14. Procédé selon la revendication 13, dans lequel le procédé comprend la mise à disposition de deux plateformes (18, 20, 22, 24).

15. Procédé selon la revendication 13, dans lequel le procédé comprend la mise à disposition de trois plateformes (18, 20, 22, 24).

16. Procédé selon la revendication 14 ou la revendication 15, dans lequel le procédé comprend la mise à disposition de pistons (26) séparés pour déplacer chaque plateforme (18, 20, 22, 24).

17. Procédé selon l'une quelconque des revendications 13 à 16, dans lequel le procédé comprend le déplacement de la ou des plateformes (18, 20, 22, 24) alors même que la ou les plateformes (18, 20, 22, 24) supportent des biens.

18. Procédé selon l'une quelconque des revendications 13 à 17, dans lequel le procédé comprend le verrouillage de la plateforme (18, 20, 22, 24) en position par rapport à la remorque (10).

19. Procédé selon la revendication 18, dans lequel le procédé comprend la signalisation de lorsque la plateforme (18, 20, 22, 24) est verrouillée ou déverrouillée par rapport à la remorque (10).
